# EUROPEAN PATENT APPLICATION

(11) **EP 0 797 159 A1**
(43) Date of publication of application: **24.09.1997**
(21) Application number: 97301139.8
(22) Date of filing: 21.02.1997
(51) Int. Cl.: G06F 17/30, G06F 9/445

(54) **Graphic user interface apparatus and method for computer networking**

(30) Priority: 18.03.1996 GB 9605668
(71) Applicant: International Business Machines Corporation, Armonk, N.Y. 10504 (US)
(72) Inventor: Hoggarth, Roger Philip, Skelmorlie, Ayrshire PA17 5BH (GB); Massay, Andrew Liam, Largs, Ayrshire KA30 9DN (GB); McCall, Colin David, Glasgow G41 5RJ (GB); Syyed, Sohail, Polockshields, Glasgow G41 5EA (GB)
(74) Representative: Williams, Julian David

(57) **Abstract**

Graphic user interface apparatus, for a server computer system which is connectable to a plurality of client computer systems in a computer network, comprises means for displaying a plurality of client indicators, each signifying a different one of the client computer systems, and a plurality of profile indicators, each signifying a different function stored in the server computer system and executable by one or more of the client computer systems. Means is provided for associating a selected profile indicator with a selected client indicator. Loading means loads, in response to the association, the function signified by the selected profile indicator from the server computer system to the client computer system signified by the selected client indicator.

## Description

The present invention relates to a graphic user interface apparatus and method for a computer network in which a plurality of client computer systems are connected to a server computer system.

In a typical network environment, multiple client computer systems (clients) are connected to one or more server computer systems (server). In a first common arrangement, each client system includes an operating system and possibly other software, stored on a hard file within the client. On power-up the client boots from the operating system stored on the hard file without reference to the server computer. This type of boot is called a local program load. Other application software e.g. word processing, database software etc, held on storage associated with the server system, is accessed as needed by the client system.

In an alternative network configuration, the client computer does not have a local operating system. Consequently, when such a client system is powered-up, the client fetches its operating system software from the server system. This process is called Remote Initial Program Load (hereinafter termed 'RPL').

A network in which each client system RPLs from a server system (an RPL network) has an advantage over the first type of network configuration in that the network administrator has full control over the client software at all times. Thus the network administrator is able to control the operation and configuration of all the client systems and can go some way to prevent users of the network from installing and using undesirable and/or unlicensed software on their client systems. By controlling the network from the server in this manner, the overall network maintenance costs are lower thus leading to lower operating costs.

However, an RPL network has a number of disadvantages, not the least of which is the high network loading when a large number of clients RPL at one time. This overloading can cause disruption especially in large network environments. The effects of network overloading can be reduced by providing a higher ratio of server to client systems. Typically this will require a ratio of e.g. 1:10 in an RPL network, whereas in the first type ("non-RPL") of network a typical ratio is more of the order of 1:100. The higher ratio in RPL networks tends to increase the equipment costs of the network (server systems are generally more expensive than client systems) thus largely negating the lower maintenance costs.

The installation, maintenance and control of software, especially operating system software, on a conventional computer network can be time-consuming, costly, and difficult to manage. Such difficulty arises particularly when the network comprises a range of different computer systems each having different hardware attributes (e.g. memory size and video resolution) and each having different software configurations. The computer systems may be widely distributed throughout an commercial organisation. Accordingly, it would be desirable to provide for network, method of network operation, graphic user interface, and computer program product which avoided at least some of the aforementioned disadvantages.

In accordance with the present invention, there is now provided graphic user interface apparatus for a server computer system which is connectable to a plurality of client computer systems in a computer network, the apparatus comprising: means for displaying a plurality of client indicators, each signifying a different one of the client computer systems, and a plurality of profile indicators, each signifying a different function stored in the server computer system and executable by one or more of the client computer systems; means for associating a selected profile indicator with a selected client indicator; and means for loading, in response to the association, the function signified by the selected profile indicator from the server computer system to the client computer system signified by the selected client indicator.

This advantageously simplifies the task of installing and maintaining functions, such as operating systems and/or application software, into multiple client computer systems of a computer network from a server computer system of the network. Specifically, the present invention enables the network administration to install and/or upgrade functions in the client systems remotely via a graphic user interface. Within the graphic user interface, the administrator simply selects an indicator or icon representative of a desired function, selects an indicator or icon representative of a client computer system on which the desired function is to be loaded, and associates the selected indicators. In a preferred embodiment of the present invention, the selection and association is conveniently effected via button click commands on pointing device such as a mouse. The desired function may include an operating system, an application software package, an operating system or application upgrade, or any combination or multiplicity thereof.

Preferably, the association means comprises means for moving the selected profile indicator relative to the selected client indicator, the association being effected in response to the selected profile indicator and the selected client indicator falling within a predetermined range of each other. This enables the network administrator to install and maintain function (e.g. software) on the client computer systems via simple "drag and drop" operations within the graphic user interface.

It will be appreciated that the present invention extends to a server computer system for connection to a plurality of client computer systems in a computer network, the server computer system comprising such graphic user interface apparatus.

It will also be appreciated that the present invention further extends to a computer network comprising a plurality of client computer systems connected to such a server computer system.

Viewing the present invention from another aspect, there is provided a method of loading functions from a server computer system into a plurality of client computer systems connected to the server computer system in a computer network via a graphic user interface, the method comprising: displaying a plurality of client indicators, each signifying a different one of the client computer systems; displaying a plurality of profile indicators, each signifying a different function stored in the server computer system and executable by one or more of the client computer systems; associating a selected profile indicator with a selected client indicator; and loading, in response to the association, the function signified by the selected profile indicator from the server computer system to the client computer system signified by the selected client indicator.

The associating step preferably comprises moving the selected profile indicator relative to the selected client indicator, the association being effected in response to the selected profile indicator and the selected client indicator falling within a predetermined range of each other.

Viewing the present invention from yet another aspect, there is provided a computer program product for a server computer system which is connectable to a plurality of client computer systems in a computer network, the product comprising a graphic user interface having: means for displaying a plurality of client indicators, each signifying a different one of the client computer systems, and a plurality of profile indicators, each signifying a different function stored in the server computer system and executable by one or more of the client computer systems; means for associating a selected profile indicator with a selected client indicator; and means for loading, in response to the association, the function signified by the selected profile indicator from the server computer system to the client computer system signified by the selected client indicator.

A preferred embodiment of the present invention will now be described, by way of example only, with reference to the accompanying drawings.
Figure 1 illustrates a computer network according to a preferred embodiment of the present invention;
Figure 2 is a block-diagram of a client computer system connected to a server computer system in the network of Figure 1;
Figure 3 is a block diagram of the data base files retained by the server computer system in a preferred embodiment of the present invention;
Figure 4 is a time-line diagram of the state of each data base file during a change prompted by the administrator in a preferred embodiment of the present invention;
Figure 5 is a Main Form of a graphic user interface of an embodiment of the present invention;
Figure 6 is an Edit Site Form of a graphic user interface of an embodiment of the present invention;
Figure 7 is an Edit Client Form (Details Note book) of a graphic user interface of an embodiment of the present invention;
Figure 8 is an Edit Client Form (Hardware Note book) of a graphic user interface of an embodiment of the present invention;
Figure 9 is an Edit Client Form (Hybrid RPL Note book) of a graphic user interface of an embodiment of the present invention;
Figure 10 is an Edit Client Form (Normal RPL Note book) of a graphic user interface of an embodiment of the present invention;
Figure 11 is an Edit Profile Form (Details Note book) of a graphic user interface of an embodiment of the present invention;
Figure 12 is an Edit Profile Form (Minimal Hardware Note book) of a graphic user interface of an embodiment of the present invention;
Figure 13 is an Edit Profile Form (Hybrid RPL Note book) of a graphic user interface of an embodiment of the present invention;
Figure 14 is an Edit Profile Form (Normal RPL Note book) of a graphic user interface of an embodiment of the present invention;
Figure 15 is an Client Server Mismatch Form of a graphic user interface of an embodiment of the present invention;
Figure 16 is a Quick Form 1 of a graphic user interface of an embodiment of the present invention;
Figure 17 is a Quick Scan Form 1 of a graphic user interface of an embodiment of the present invention;
Figure 18 is a Quick Scan Form 2 of a graphic user interface of an embodiment of the present invention;
Figure 19 is a Quick Form 2 of a graphic user interface of an embodiment of the present invention;
Figure 20 is an Exit Update Form of a graphic user interface of an embodiment of the present invention; and,
Figure 21 is an Error Form of a graphic user interface of an embodiment of the present invention.

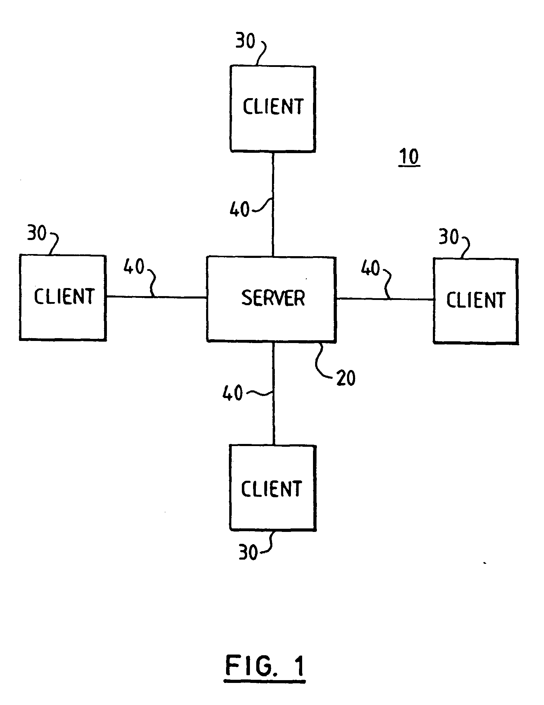

Referring first to Figure 1, there is shown a local area network (LAN) environment 10 according to a preferred embodiment of the invention. The network 10 of Figure 1 is constituted of a server computer system 20 (which may be an IBM PC 700 series server having a Novell Netware network operating system) connected at 40 for communication with a plurality of client computer systems 30. The client computer systems 30 may be personal computers eg. as sold by IBM Corporation and other manufacturers which are based on the Intel X86 family of microprocessors. Typically such computers 30 include a LAN adaptor card to provide the link to the server computer 20. Control of resources on the network 10 including communication between server 20 and client 30 is effected by means of a network operating system (NOS) such as OS/2 LAN Server from IBM Corporation having a "server" component which executes on the main processor(s) of the server computer system 20 and a corresponding "requester" component which executes on the main processor of each client computer system 30. Other network operating systems include Novell Netware from Novell Inc. and OS/2 WARP Server from IBM Corporation.

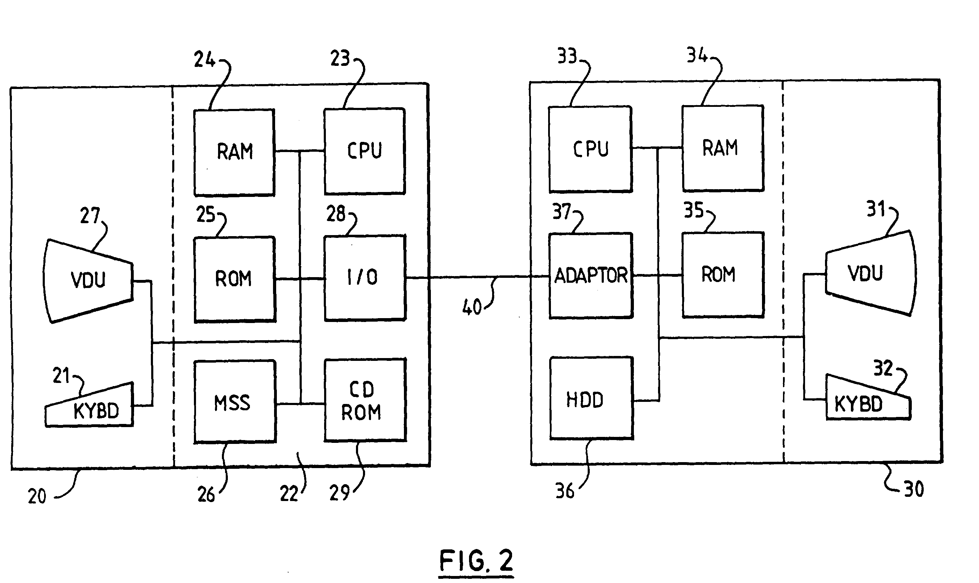

Referring now to Figure 2, there is shown a server computer system 20 connected to a client system 30 via a communication link 40. As is normal, the client system 30, constituted by a personal computer, includes a keyboard 32 and a display 32 operating under the control of control logic in the form of a main CPU 33 which is connected by a system bus to system memory (RAM) 34, non-volatile memory (ROM) 35, in which is stored system BIOS, and also to one or more storage devices such as hard disk file (HDD) 36. In a preferred client system, there is no diskette drive or similar removable storage device provided. The user of such a system is therefore unable to introduce software or data into the system via a floppy disk, CD ROM or the like.

The server system 20 includes a keyboard 21 attached to a system unit 22 including a main CPU 23, system RAM 24, system ROM 25, and mass storage capability 26, typically in the form of multiple magnetic disk drives constituted in a RAID (redundant array of independent disks) arrangement. Stored on the server mass storage devices is a variety of different types of software including but not necessarily limited to operating system software, mirrors of which are stored on the hard file 36 of each client computer system 30, and application software. The server system 20 also includes a display 27 enabling direct interaction between the system 20 and a network administrator. The server system 20 may also include other storage devices such as diskette drives and CD ROM drives. In some embodiments of the present invention, the display 27 and keyboard 21 of the server 20 may be coupled to the server system unit 22 via an intermediate personal computer.

Although not indicated in Figures 1 or 2, the network 10 may comprise two or more server systems 20 connected to a subset or all of the client computer systems 30. Furthermore, the client computer systems 30 may not all be of the type described above. For example, the network 10 may include so-called "media-less" workstations. Such workstations do not include a mass storage device 36 and are therefore incapable of locally storing an operating system. Such systems instead RPL from the server system 20 at boot time in a conventional manner.

As hereinbefore discussed, client systems in known networks boot from a server via a remote program load (RPL) operation, or alternatively execute a local program load operation from an operating system stored locally on the hard disk. In preferred embodiments of the present invention, there is provided a "hybrid program load mechanism which combines the advantages of both conventional RPL and local program load techniques while avoiding at least some of their disadvantages.

The hybrid remote/local program load (Hybrid RPL) technique operates in two modes: Normal and Special.

In the Normal case, at power-on or re-boot of a client system having a local operating system, the client issues a request for RPL on the network. This operation cannot be bypassed by the user of the client system. The server system responds with a bootstrap program which initiates a local program load at the client which then loads and operates, in effect, like a normal (ie: non-RPL) client system.

In the Special case, when the network administrator wishes to take control of the client system, e.g. for maintenance purposes, the administrator firstly changes the set-up of the server system to specify a different RPL bootstrap program for the client, e.g. a minimal operating system with a remote maintenance utility. At the next power-on or re-boot, the client system issues a request for RPL as usual. The server then responds with the special bootstrap program specified by the administrator. In response to the bootstrap program, the client then operates like a conventional RPL client, loading the software specified by the administrator onto the hard disk. The administrator then changes the set-up of the server to specify a local program load for the client. At the next power-on or re-boot, then client then reverts to the normal operation and carries out a local program load from the "amended" software.

Further details of Hybrid RPL are contained in the UK patent application filed concurrently herewith under the agents reference UK9-96-017, the contents of which is incorporated herein in full.

In a preferred embodiment of the present invention, the hybrid RPL is implemented via a network software suite comprising a range of software that runs on each client and a central control process that runs on a server. The software that runs on each client includes: security programs for limiting user access to the hard disk under various operating systems; a network scan client program for interrogating the local hardware before reporting details on the configuration of each client back to the server; and BIOS security extensions for limiting the users ability to tamper with the hardware.

The network server software supports the installation and maintenance of network clients. Such support includes automatic gathering of client information across a network. The server software comprises a Network scan control program for monitoring and collecting traffic from multiple clients.

As mentioned earlier, the network server software can also remotely down-load and control all software on each client's hard disk, while minimizing the load on the server and the network. As indicated earlier, this is known as Hybrid RPL. Furthermore, the server software can RPL software to clients in the conventional sense but with an improved user interface. This is known as Normal RPL. The server software also allows addition and deletion of clients from a list of network connected clients retained by the server. These features are discussed in more detail below.

### Installation and network scanning

A central program in the server is started by the administrator. The central program listens for RPL FIND.FRAME requests on the network. When a request has been unanswered n-times, the central program assumes that the requesting client is not being serviced by another server. The central program then checks the network address of the requester against the local list of networks. If the requester is not on the list, the central program marks this address as requiring a RPL of the scan client software. The correct files in the server are then adjusted and the software is RPLed to the requester. The central program then listens for transmissions from this client software. From the information received, the central program builds a record of all the information on the client that the scan process was able to gather. If the requester is identified as a network box then the requester is added to a list of unassigned clients for future processing by the server software.

### Hybrid RPL

Normal RPL has advantages and disadvantages. The advantages include the following:
a. The administrator has full control over all client software at all times.
b. The administrator has control over the operation and configuration of all clients.
c. Reduced maintenance and cost of ownership.
The disadvantages include the following:
a. Severe network loading when all clients RPL at one time.
b. Severe network loading from disk-less clients, even after RPL has completed.
c. Poor client to server ratios due to the load constraints on servers when many clients RPL at one time (this is typically in the 10 to 1 range when normal, I.E. non-RPL, client to server ratios are in the 100 to 1 range).
d. Increased initial hardware and configuration costs due to the first three points.

Hybrid RPL is provides the advantages of normal RPL without the associated disadvantages.

In preferred embodiment of the present invention, this is achieved by providing each client with a hard disk. The administrator can then set up all read/write files for each client on the server and create a software image to down-load onto each client. The server then RPLs these read only files (e.g. the operating system, the applications, etc.) onto the clients hard disk. This code can then be run on the local client with no network or server load at all.

In preferred embodiments of the present invention, in each client, the hard disk is preferably made read only as far as the user is concerned; the floppy disk drive is preferably removed; the network is preferably made the only boot option; user access to the local BIOS is disabled; and, the hard disk is made unbootable. Simultaneously, in the server, the RPL settings are changed such that the client RPLs only a small piece of code to enable the client to boot of its hard disk. This allows the following:
a. The administrator to retain full control over each clients software.
b. The RPL image setting to be changed for any client at any time. The next time that client boots, it receives a one-shot down-load of the new software.
c. The administrator retains full control over ALL client operations. If the client is removed from the network, it will attempt to RPL and will fail. The hard disk is not bootable and is useless without the special RPL code the server can down-load. All read/write and data files are retained on the server. The user cannot save any files locally. Thus, even if the user can boot the client, there will be no files to work on and no local store. As all read/write files are held on the server the administrator has much more control over configuration, access rights, etc.
d. The maintenance and cost of ownership are reduced.
e. Network loading is not severe as RPL images (e.g. the bootstrap program allowing a client to boot from the local hard disk) are normally relatively small. The only time relatively large images are sent across the network is when clients are initialized or upgraded. The network server software allows specification of how many clients are allowed to do this at any one time (e.g. any 10 of 100 clients are allowed to get new images for their hard disks at any one time). The resulting rolling window of clients being serviced permits control of the exact loading on a server while up-load of software to all the clients continues.
f. The clients have nearly all the files they need on their local hard disks. Therefore, the only network and server accesses concern read/write files. This reduces load levels on the network and the server.

As hereinbefore indicated, hybrid RPL offers the advantages of normal RPL without the disadvantages.

### Normal RPL

In preferred embodiments of the present invention, the server software supports normal RPL for networks. The server software comprises a graphics user interface (GUI) which reduces the maintenance aspects of controlling RPL across multiple clients. The GUI includes a facility to drag and drop multiple clients onto a pre-set normal RPL definition.

### Site Maintenance

The server software allows easy maintenance of all clients attached to a server, including reconfiguration of software for clients and deletion and addition of clients to a site.

Further details of network scanning are contained in the UK patent application filed concurrently herewith under the agents reference UK9-96-019, the contents of which is incorporated herein in full.

What follows is a detailed description of the GUI of the server in a preferred embodiment of the present invention and the manner in which control of the server software is effected via the GUI. The GUI is implemented via a plurality of screens or "forms" which are displayed to the administrator by the display of the server computer system.

### Information Window

Each form has an information window at the top right-hand corner. This provides local help and tips to the administrator.

### Common Form Controls

These are provided at the bottom right of each form. In the interests of simplicity, there is generally consistent positioning of common controls in related forms (e.g. the controls do not appear to move as the user switches between forms. Each form is positioned relative to the last form viewed by the administrator. For example, if the administrator moves a form then the next form displayed does not snap back to the middle of the screen. Instead, the next form snaps to the middle position relative to the location at which the last displayed form was displayed.

### Form Specific controls

These are provided on the left hand side of the form, but may also appear between the information window and the common controls (e.g. the middle right of the form).

### Form Size and Position

All forms of roughly similar size and all logically related forms are re-sized to make them identical in all dimensions.

### Welcome Screens

These may be shown by the set up program that installs the network server software but they are not presented to the administrator once the installation has completed.

### Accelerators

Every administrator selectable control in a form is given a keyboard accelerator. Keyboard accelerators for each control on a form are unique to a single form.

### Standard Control Actions

The following actions apply to all common control types unless otherwise noted in the details of each specific control to be provided shortly.

### Button Controls

The following actions apply to this control, and all others have no effect.

| | |
|---|---|
| **Left Single Click** | - Activates the button. |
| **Accelerator key** | - Selects the button, return activates it. |

### Check Box Controls

The following actions apply to this control, and all others have no effect.

| | |
|---|---|
| **Left Single Click** | - Toggles the check box. |
| **Accelerator key** | - Selects the check box, return toggles it. |

### Radio Button Controls

The following actions apply to this control, and all others have no effect.

| | |
|---|---|
| **Left Single Click** | - Sets the selected radio button, unsets others in group. |
| **Accelerator key** | - Selects the radio button, return sets it and unsets others. |

### Tabbed Notebook Controls

The following actions apply to this control, and all others have no effect.

| | |
|---|---|
| **Left Single Click** | - Selects the new tabbed section. |
| **Accelerator key** | - Selects the new tabbed section. |

### Edit Boxes Controls

These operate as normal under the target operating system with no changes or extensions required.

### Common Controls

What follows is a description of the operation of controls that are common across a number of forms in the system.

In general all buttons have an accelerator key and the tab order of all items in a form will be laid out in a logical order. Unless the lay-out dictates otherwise then the tab order starts at the top left and work down and across to the bottom right of the form. Tabbing to within a group box results in the same tab order for all controls within that group box before moving to the next control on the form that is not in that group box.

The GUI permits the administrator to do all actions on all forms using either only mouse selection or only keyboard selection.

### Information Window

Simple help information is displayed here, whenever the administrator tracks the mouse over, or moves focus to, one of the controls on a form. The help information given is short and action oriented (e.g. 'Press here to load the new software').

All information text is preceded by a label specifying the exact control to which the information relates. When the administrator moves the mouse (or focus) to an area of the form that does not have associated information text then the text from the last selected control will remain on display. The information windows itself does not have any associated information text.

### Exit Button

Selecting this option returns the administrator to the previous form in the system. If more than one path is possible to any one form then the system remembers the path taken and returns the administrator to the previous form on the correct path.

Any changes made by the administrator causes a prompt to confirm the changes BEFORE leaving a form or the system. The administrator is prompted with simple dialogue box with four buttons: Commit changes (this commits the changes made and exits); Discard changes (this cancels all the changes made and exits); Cancel exit (this allows the administrator to go back to before they pressed the Exit Button); and, Help (this provides context sensitive help). Accelerators for these buttons are **C**, **D**, **A** and **H** respectively. The accelerator key for the Exit control is **X**.

### Help Button

Selection of this brings up a full help information window. The help system displays context sensitive help specific to the form that the administrator was in when this option was selected. The accelerator key for this control is **H**.

### Previous Button

Selection of this option returns the administrator to the form he or she was in BEFORE they entered the current form. The server software remembers the path taken if there are multiple paths through a number of forms and remembers the status of each form so that the administrator is returned to the previous form in the correct state. The accelerator key for this control is **P**.

### Next Button

Selection of this option takes the administrator on to the next form in the current operation. The server software remembers the path taken if there are multiple paths through a number of forms and remembers the status of each form so that the administrator can return to this form if required. The accelerator key for this control is **N**.

### Data files and cancel operations

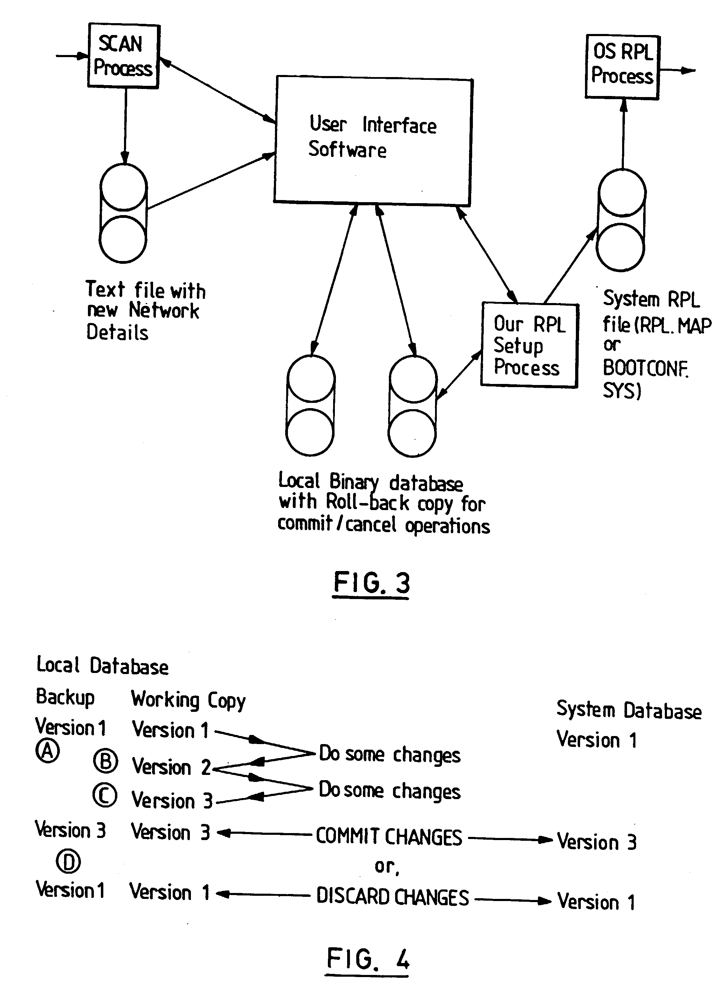

The database files and processes involved in the server software are shown in Figure 3.

The GUI gets initial network details from the text files created by the network scan process. These files along with administrator input are used to create a local binary database (called the "local database"). Whenever the administrator enters the GUI, a back-up copy of the local database is made. Any changes the administrator makes are made to the new copy. When the administrator leaves the GUI he or she is prompted to commit all the changes made or roll-back to the back-up database. In addition, the administrator is prompted by the GUI each time he or she makes a change to clients or profiles. There are therefore, two levels of roll-back: one on single edits made to the local database; and, one on committing or discarding all the changes made during an extended session in the GUI.

When the administrator commits the changes made to the local database the GUI starts another process. This takes the local database information and uses it to update the system RPL files (called the "system database"). The system database is only updated when the administrator commits all the changes made, e.g. when they exit the GUI software. A time-line diagram of the state of each database is shown in Figure 4. There are a number of points of note in this diagram :-
A) At this point the administrator has entered the GUI software and all the databases are at version 1.
B) At this point the administrator has made some edits to the local database and the working copy of this database is at version 2. Both the back-up copy of the local database and the system database are still at version 1.
C) At this point the administrator has made yet more edits to the local database and the working copy of this database is at version 3. Both the back-up copy of the local database and the system database are still at version 1.
D) Here the administrator exits the GUI. At this point the administrator is prompted to commit the changes. If the administrator commits the changes the all the databases will move to version 3. If the administrator cancels the changes made then all the databases will revert to version 1. There is no way to roll-back to version 2 at this point.

### MAIN FORM

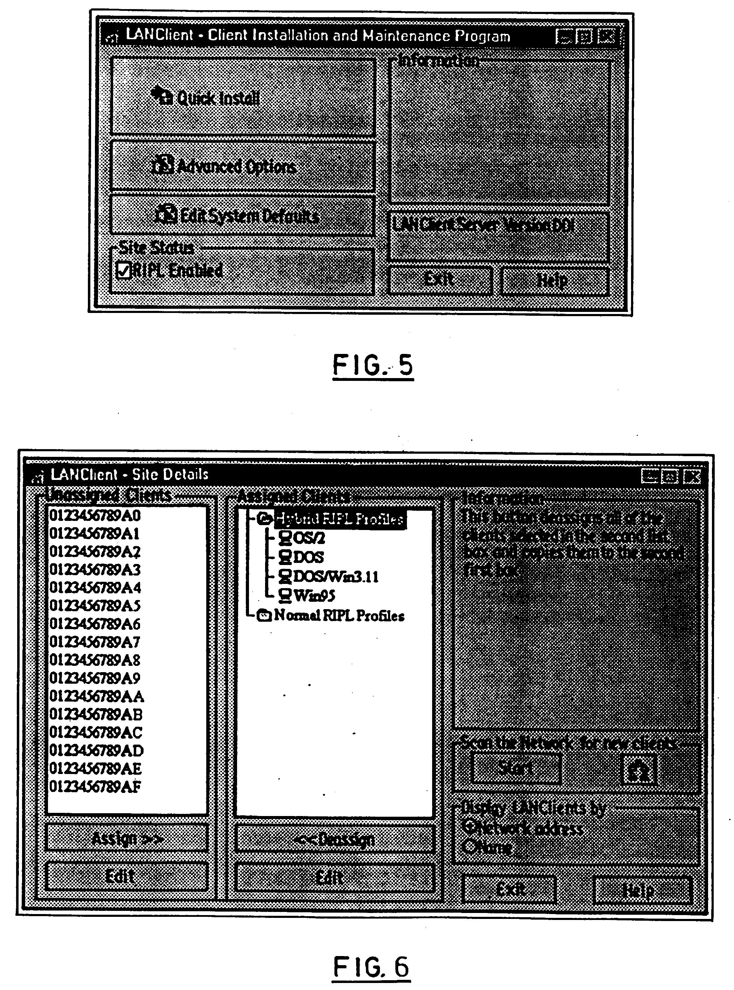

Referring now to Figure 5, this form allows the administrator to select three main actions: Quick Installation of a number of new clients; Editing the site details for all the current clients; or, Editing the system defaults. These will be are discussed in detail later.

### Entry Conditions

All previous settings made by the administrator are restored upon entry. The Quick Install button is selected as the default action.

### Detailed Description of Form Contents

### Quick Install Button

When the administrator selects this option the first quick install form appears. No confirmation is required on this action. The accelerator key for this control is **Q**.

### Advanced Options Button

When the administrator selects this option the edit site form appears. No confirmation is required on this action. The accelerator key for this control is **S**.

### Edit System Default Button

When the administrator selects this option the edit site form appears. No confirmation is required on this action. The accelerator key for this control is **D**.

### Exit Program Button

When the administrator selects this option the program shut down. If any changes have been made to the local database then the administrator is prompted to save or discard these changes. This is the only point at which the system database files is updated. If the administrator selects to commit the changes then the local and system database changes are committed and the System File Change Form appears to show the current state of the modifications to the system database. No confirmation is required on this action if the local database has not been changed. The accelerator key for this control is **X**.

### RPL Status Check Box

This check box displays the current status of RPL on the server. If the box is checked then RPL is enabled. The administrator can switch all RPL operations on and off using this check box. Confirmation is required on this action as switching RPL off could stop clients working if they are re-booted while RPL is off. Any change made takes place at once. The accelerator key for this control is **R**.

### Exit Conditions

Any modifications made by the administrator are saved to disk upon exit from the system. The administrator is presented with the standard Exit commitment dialogue box (as described earlier). In this case, committing the changes causes the local data base to be used to update the system database on the server and all of the changes are made active. Selecting discard causes the local database to be rolled back to its state prior to running the program and no changes are made to the system RPL files.

### EDIT SITE FORM

Referring now to Figure 6, this form allows the administrator to perform the following actions: Edit, and maintain the list of clients on the site; Edit, and maintain the software Profiles on the site; Edit, and maintain the mapping of clients to Profiles; scan the network for more new clients; and, Enable and Disable all RPLing on the server. All of these will be discussed in detail later.

Any changes made in this form to the assignment of any clients to any profiles result in the administrator being prompted to commit those changes to the working copy of the local database before he or she can exit this form or edit a profile or a client. Data validation for mismatched clients only takes place at this point. The administrator is not allowed to exit this form with a network scan still in operation.

### Entry Conditions

All previous settings made by the administrator are restored upon entry. In particular, the lists of Unassigned clients, Software Profiles, and assigned clients are restored to their last known settings. This includes the lay-out of the Profile outlines window, including which folders are expanded, etc. The start and stop buttons, radio buttons and check boxes all display the status last set by the administrator. The only exception to this is when the administrator changes the number or type of either a client or a Software Profile while in the client or Software Profiles Edit Forms. In this case the state of the Unassigned clients and Assigned clients Outlines reflects any changes made. The exit button is selected as the default action.

### Detailed Description of Form Contents

### Unassigned clients Windows

This contains a single level list of all the clients currently NOT assigned to any Software Profile. These can be shown either as a list of Network addresses, or as a list of administrator defined client Names. In both cases the names and numbers used are unique on the server. The administrator can toggle between each of these two modes via the radio buttons described later. Each entry in the Unassigned clients window has a small icon next to it. The icon may be a pictorial representation of a client computer (this is not shown in Figure 6). The administrator can multi-select client items in this control. All items in this control are be arranged in alphabetical order. The following actions apply to the client items in this control, and all others have no effect (Note: the normal multi-select actions for individual operating systems apply unless specifically detailed below).

| | |
|---|---|
| **Left Single Click on new item** | - Selects a single item. |
| **Left Single Click on selected items** | - Starts Drag operation. |
| **Left Double Click on new item** | - Brings up the Edit client Form for that client. |
| **Left Double Click on selected items** | - Brings up the Edit client Form for the client(s). |
| **Keyboard** | - Normal outline key actions are supported. |

### Assigned clients Windows

This contains a three level outline list of all the Software Profiles and all the clients currently assigned to these Software Profiles. This control contains three types of item: Top level, Main Profile folders; Second level, Software Profile folders; and, Third level, Assigned client items. All items in this control are arranged in alphabetical order. Only one item type may be selected in the outline list at any one time, e.g. it is not possible to have a selected Software Profile and a selected Assigned client.

The top level of this outline list contains two folder items. Each of these is shown with a folder icon next to it in the normal fashion, with opened and closed bit-maps. The bit-maps used are preferably different from those used in the second level folders as drop is not a valid action on top level folders. The two top items are folders for Hybrid RPL Software Profiles and Normal RPL Software Profiles. Each of these folders may only contain any number of second level items. The administrator cannot multi-select top level items. The following actions apply to the top level items in this control, and all others have no effect.

| | |
|---|---|
| **Left Single Click on item** | - Selects a folder. |
| **Left Double Click on item** | - Opens and Closes a folder. |
| **Left Release on second level folder** | - Drop action of clients on that folder. |
| **Keyboard** | - Normal outline key actions are supported. |

Each folder in the first level of this outline list may contain any number of second level Software Profile Folders. Each of these is shown with a folder icon next to it in the normal fashion, with opened and closed bit-maps. The bit-maps are different from those used in the top level folders as drop is a valid action on top level folders. These folders are given names by the administrator and the names are unique within a top level folder (e.g. there can only be two Profiles called 'Fred' if one is a Hybrid RPL Software Profile and the other is a Normal RPL Software Profile). The administrators cannot multi-select a second level item. Also, the administrator cannot multi-select second level items across top level folders or mix multi selection of Software Profiles with Assigned clients. Each of these folders may only contain any number of third level Assigned client items. The following actions apply to the second level items in this control, and all others have no effect. NOTE: the normal multi-select actions for individual operating systems apply unless specifically detailed below.

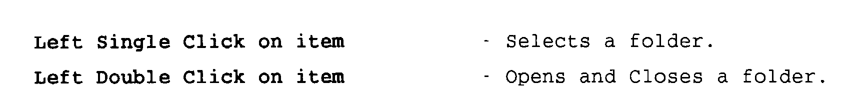

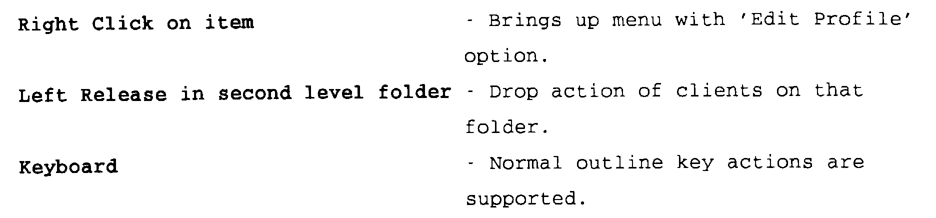

Each second level folder may contain any number of third level Assigned clients. These can be shown either as a list of Network addresses, or as a list of administrator defined client Names. In both cases the names and numbers used are unique on the server. The administrator can toggle between each of these two modes by using the radio buttons described later. Each client entry in the Assigned clients window has a small icon next to it. The icon is a pictorial representation of a client computer (this is not shown in Figure 6). Assigned clients are the lowest level of this outline and CANNOT contain other items. The administrator can multi-select Assigned clients within a single second level folder. The administrator cannot multi-select Assigned clients across second level folders or mix multi selection of Software Profiles with Assigned clients. The administrator can drag and drop Assigned clients between different Software Profile folders. The following actions apply to this control, and all others have no effect.

| | |
|---|---|
| **Left Single Click on new item** | - Selects a single item, deselects any existing. |
| **Left Single Click on selected items** | - Starts Drag operation. |
| **Left Double Click on new item** | - Brings up the Edit client Form for that client. |
| **Left Double Click on selected items** | - Brings up the Edit client Form for the client(s). |

### Assign clients Button

When the administrator selects this option the selected clients in the Unassigned clients list will be moved to the selected Software Profile list. This button is ONLY enabled when there are one or more selected Unassigned clients and ONE selected Software Profile. In ALL other cases this button is grayed. No confirmation is required on the move action. The accelerator key for this control is **A**.

### Deassign clients Button

When the administrator selects this option the selected Assigned clients in the Software Profiles list is moved to the Unassigned clients list. This button is ONLY enabled when there are one or more selected Assigned clients. In ALL other cases this button is grayed. No confirmation is required on the move action. The accelerator key for this control is **D**.

### Edit/New Unassigned client Button

When the administrator selects this option the Edit client Form appears for the selected Unassigned clients. When there are no selected unassigned clients this button says New Client and the Edit client form appears for a new client when this button is selected. In all other cases this button is grayed. No confirmation is required on this action. The accelerator key for this control is **E**.

### Edit Assigned client/Software Profile Button

When the administrator selects this option the Edit client Form or the Edit Profile Form appears for the selected Assigned clients or Profile. When there are no selected assigned clients or software profiles this button says New Profile and the Edit profile form appears for a new profile when this button is selected. In all other cases this button is grayed. No confirmation is required on this action. The accelerator key for this control is **I**.

### Start/Stop Scan Button

When the administrator selects this option the software starts scanning the network for NEW clients and any new clients found are added to the Unassigned clients list as they are found. Confirmation is required on this action as it may consume network resources. Once a scan has been started, the text on the button toggles to say Stop and the next click on this button stops the scan process. The accelerator key for this control is **S**.

### Scan Progress Graphic

This is an animated bitmap that shows the administrator that a network scan operation is in progress.

### Display networks Radio Buttons

These allow the administrator to toggle the representation of clients in the List boxes used on this form. If the top button is selected then the bottom button is deselected and all of the clients in the list boxes are redrawn using their Network Addresses. If the bottom button is selected then the top button is deselected and all of the clients in the list boxes are redrawn using their Administrator Defined Names. Selecting an already selected radio button does not cause a re-draw. No confirmation is required on this action. The accelerator keys for these controls are **T** and **M**.

### Exit Conditions

Any modifications made by the administrator are remembered when leaving this form. If the administrator has started a Network scan process then he or she is prompted to shut down the scan before being allowed to leave this form.

### EDIT CLIENT FORM - Details Notebook

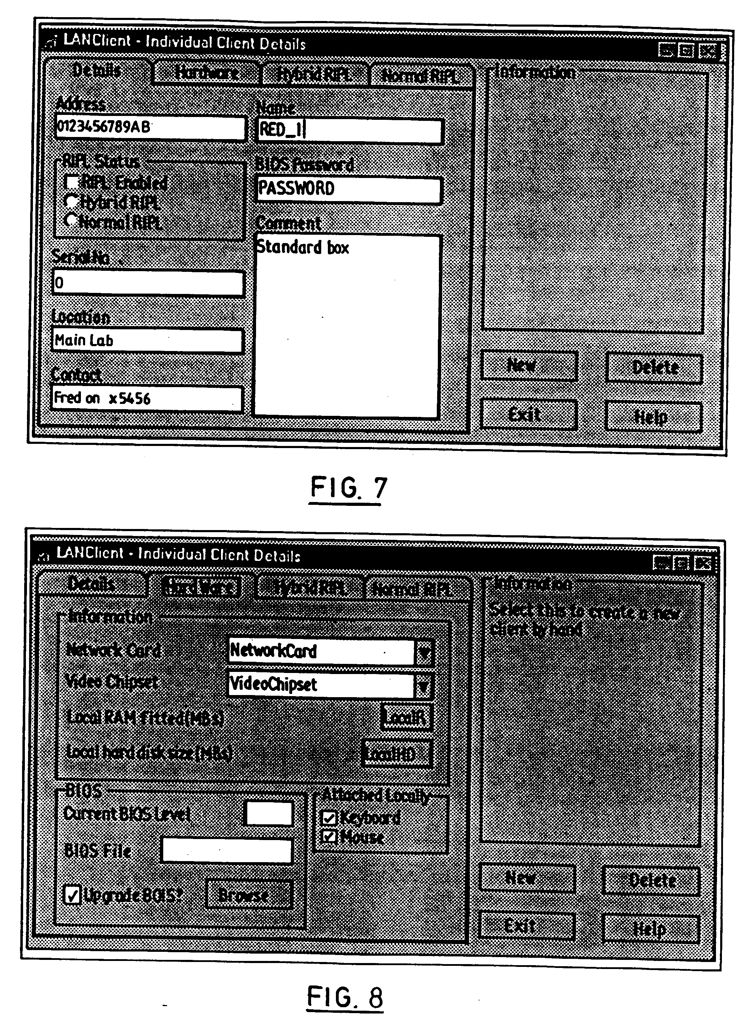

Referring now to Figure 7, this form allows the administrator to Delete clients, Create new clients, Change the details relating to a client, Switch RPL on and off for clients, Switch between Hybrid and Normal RPL, and Change the BIOS password for a client. If the administrator makes ANY changes to any of the details in any of the notebooks in this form for one or more clients then he or she is prompted to discard or save these changes to the working copy of the local database before he or she can proceed with a new, delete or exit operation. Data validation for mismatched clients only takes place at this point.

### Entry Conditions

All previous settings made by the administrator are restored upon entry. The administrator can enter this form with one client Selected or with a number of clients selected. When the administrator enters the form with one client selected then all controls are available for use and any changes made only affect the single client selected. When the administrator enters the form with MORE that one client selected then only common controls are available for use and any changes made affects all the clients selected. In this case the following controls are Grayed and filled with the "*" character: Address Edit Box, Name Edit Box, and Serial Number Edit Box. The exit button will be selected as the default action.

### Detailed Description of Form Contents

### Address Edit Box

This contains a single client network address (single client selected) or is filled with the "*" character (multiple clients selected). This box is grayed when the administrator has selected more than one client. If the administrator types into this box the action is taken to mean that the network address is being changed for this Named client. The accelerator for this control is **A**.

### Name Edit Box

This contains a single client Name (single client selected) or is filled with the "*" character (multiple clients selected). This box is grayed when the administrator has selected more than one client. If the administrator types into this box the action is taken to mean that the client Name is being changed for the client with this Network Address. The accelerator for this control is **M**.

### Serial Number Edit Box

This contains a single client Serial Number (single client selected) or is filled with the "*" character (multiple clients selected). This box is grayed when the administrator has selected more than one client. If the administrator types into this box the action is taken to mean that the Serial Number is being changed for this client. The accelerator for this control is **S**.

### Password Edit Box

This contains the Password(s) for one or more clients. If a single client is selected then this control shows the current Password text for that client. If more than one client is selected then this control is shown as empty and the values for each client are unchanged unless the administrator makes a change to this control. If more than one client is selected then changing this control sets all clients to this new value. An empty edit box means that no password is to be used. The accelerator for this control is **P**.

### Location Edit Box

This contains the location details for one or more clients. If a single client is selected then this control shows the current location text for that client. If more than one client is selected then this control is shown as empty and the values for each client is unchanged unless the administrator makes a change to this control. If more than one client is selected then changing this control sets all clients to this new value. The accelerator for this control is **L**.

### Contact Edit Box

This contains the contact details for a one or more clients. If a single client is selected then this control shows the current contact text for that client. If more than one client is selected then this control is shown as empty and the values for each client is unchanged unless the administrator makes a change to this control. If more than one client is selected then changing this control sets ALL clients to this new value. The accelerator for this control is **C**.

### Comments Edit Box

This contains the comment details for one or more clients. If a single client is selected then this control shows the current comments text for that client. If more than one client is selected then this control is shown as empty and the values for each client is unchanged unless the administrator makes a change to this control. If more than one client is selected then changing this control sets all clients to this new value. The accelerator for this control is **O**.

### RPL Enabled Check Box

This shows the current RPL status of one or more clients. The default for this control is RPL on (I.E. the check box item is set). If more than one client is selected and they have different values for this control then this control is shown as empty and the values for each client is unchanged unless the administrator makes a change to this control. If more than one client is selected then changing this control sets all clients to this new value. The accelerator for this control is **R**.

### RPL Radio Buttons

This shows the current RPL type of one or more clients. The default for this control is Hybrid RPL (I.E. the top radio button is set). If more than one client is selected and they have different values for these controls then neither radio button is set and the values for each client is unchanged unless the administrator makes a change to one of these controls. If more than one client is selected then changing these controls is set all selected clients to this new value. Depending on the state of this radio button one of the two tabbed RPL sections in this notebook is grayed. The accelerator for these controls are **Y** and **L**.

### New client Button

The action of this control is common across ALL tabbed notebook sections in this form. This will cause all controls to be either cleared, in the case of controls that have no default values, or set to their defaults. The Details Notebook section is selected and focus is placed in Network Address edit box. If the administrator has previously made any changes to any of the clients selected when he entered this form then confirmation is required. The administrator is prompted with simple dialogue box with four buttons: Commit changes (this commits the changes made and starts the new operation) ; Discard changes (this cancels all the changes made and starts the new operation); Cancel New (this allows the administrator to go back to before they pressed the New Button); and, Help, (this provides context sensitive help). Accelerators for these buttons are **C**, **D**, **A** and **H**. The accelerator for the New client Button is **N**.

### Delete client Button

The action of this control is common across ALL tabbed notebook sections in this form. This causes all selected clients to be deleted from the local database and returns the administrator to the Edit Site Form. Confirmation is required. The administrator is prompted with simple dialogue box with three buttons: Commit Delete (this commits the deletion and returns to the Edit Site Form) ; Cancel Delete (this cancels the delete and returns to the Edit client Form) ; Help (this provides context sensitive help). Accelerators for these buttons are **C**, **A** and **H**. The accelerator for the Delete client Button is **D**.

### Exit Conditions

Any modifications made by the administrator are saved to disk upon exit from this form. The administrator is prompted for confirmation of this.

### EDIT CLIENT FORM - Hardware Notebook

Referring now to Figure 8, this form allows the administrator to modify the hardware description of one or more clients. The database for this form is populated by the Network scan program. The administrator should only have to access this dialogue box when he or she have upgraded a number of boxes.

### Entry Conditions

All previous settings made by the administrator are restored upon entry. The administrator can enter this form with one client Selected or with a number of clients selected. When the administrator enters the form with one client selected then all controls are available for use and any changes made only affect the single client selected.

When the administrator enters the form with MORE that one client selected then all the controls are available for use but any that have conflicting details across clients (e.g. some boxes with 8 MB of RAM and others with 16 MB) are shown as empty. These values remain unchanged for each client unless the administrator changes an entry in one of these controls. If the administrator makes ANY entries into a control, then it the value of that control is set for ALL the selected clients. The exit button is selected as the default action.

### Detailed Description of Form Contents

### Network Card Combo Box

This contains a read only list of all the card types supported by the system. The FIRST entry in the list is taken to be the default. The accelerator for this control is **T**.

### Video Chipset Combo Box

This contains a read only list of all the video chipsets supported by the system. The FIRST entry in the list is taken to be the default. The accelerator for this control is **V**.

### Local RAM Edit Box

This contains the amount of RAM in the client(s) in Mega Bytes. The default for this is 8. The accelerator for this control is **R**.

### Local Hard Disk Edit Box

This contains the amount of Hard Disk in the client(s) in Mega Bytes. The default for this is 540. This item is grayed if the Local Hard Disk check box is NOT set. The accelerator for this control is **A**.

### Locally Attached Hardware Check Boxes

This contains the Locally Attached hardware for one or more clients. At present this is limited to Keyboard and Mouse. If these items are selected then the hardware is present in the client(s). If the Hard Disk check box is NOT set then the Local Hard Disk edit box is grayed. The accelerators for these control are **K**, **M**.

### Current BIOS level

This contains the current level of the BIOS. This is for information only and cannot be changed by the administrator.

### BIOS File Edit Box

This contains the file to be used to upgrade the BIOS on this client. The accelerator for this control is **B**.

### BIOS File Browse Button

This jumps to the common files dialogue box. This allows the administrator to select a BIOS upgrade file. The accelerator for this control is **F**.

### BIOS Upgrade Check Box

When this is set the BIOS file selected is used to upgrade the BIOS level on the client the next time it reboots. This check box is disabled until the administrator selects an upgrade file. The accelerator for this control is **U**.

### Exit Conditions

Any modifications made by the administrator are saved to the local database upon exit from this form. The administrator is prompted for confirmation of this.

### EDIT CLIENT FORM - Hybrid RPL Notebook

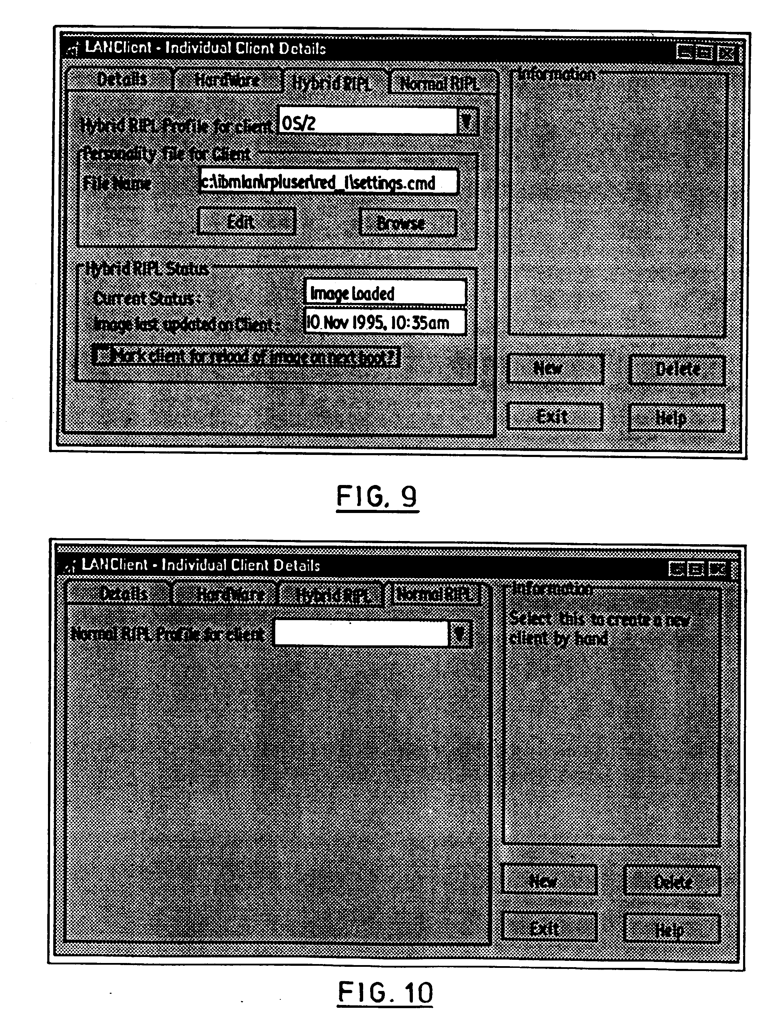

Referring now to Figure 9, this form allows the administrator to modify the Hybrid RPL details of one or more clients. Note that while both Hybrid and Normal RPL options can be set for a client only one of these is ever active at any moment in time. However, the settings for both are remembered at all times so that the administrator can switch quickly between the two.

### Entry Conditions

All previous settings made by the administrator are restored upon entry. The administrator can enter this form with one client selected or with a number of clients selected. When the administrator enters the form with one client selected then all controls are available for use and any changes made only affect the single client selected. When the administrator enters the form with more that one client selected then some of the controls are grayed as it is NOT meaningful to make changes in these controls across clients. These are Personality File Name Edit Box, Personality File Name Edit Button, and Personality File Name Browse Button.

All other controls are available for use but any that have conflicting details across clients (e.g. different Software Profiles) are shown as empty. These values remain unchanged for each client unless the administrator makes an entry into one of these controls. If the administrator makes any entries into a control, the value of that control is set for ALL the selected clients. The exit button is selected as the default action.

### Detailed Description of Form Contents

### Hybrid Profile Name Combo Box

This contains a read only list of all the hybrid profiles supported by the system. The FIRST entry in the list is taken to be the default. If the administrator changes the RPL image for one or more clients then the RPL Image Status Edit Box changes to the Image Download Pending state, the Image Date Edit Box is grayed and the Reload Image Check Box is set. The accelerator for this control is **Y**.

### Personality File Name Edit Box

This contains the full path and name of the batch/command file to be used to configure a client. Adding a value in here ungray the edit button. The accelerator for this control is **P**.

### Personality File Name Edit Button

Pressing the button brings up the default editor for the operating system with the personality file. This allows the administrator to edit the personality file directly. This button is grayed unless a file has been specified already. The accelerator for this control is **E**.

### Personality File Name Edit Button

This button brings up the common file dialogue to allow the administrator to select a personality file. This filters for files with the '.bat' and '.cmd' extensions by default. The accelerator for this control is **B**.

### Hybrid RPL Image Status Edit Box

This is a read only edit box containing the current status of hybrid RPL for one or more clients. This can be either Image Download Pending or Image Loaded.

### Hybrid RPL Image Date Edit Box

This is a read only edit box containing the date and time of the last image loaded to the client. This only makes sense when the RPL Image State is set to Image Loaded and this box is grayed at all other times.

### Hybrid RPL Image Reload Check Box

This shows the current state of the hybrid RPL image for one or more clients. If the administrator selects this then the RPL Image Status Edit Box changes to the Image Download Pending state and the Image Date Edit Box is grayed. The accelerator for this control is R.

### Exit Conditions

Any modifications made by the administrator is saved to the local database upon exit from this form. The administrator is prompted for confirmation of this.

### EDIT CLIENT FORM - Normal RPL Notebook

Referring now to Figure 10, this form allows the administrator to modify the Normal RPL details of one or more clients. Note that while both Hybrid and Normal RPL options can be set for a client only one of these is ever active at any moment in time. However, the settings for both are remembered at all times so that the administrator can switch quickly between the two.

### Entry Conditions

All previous settings made by the administrator are restored upon entry. The administrator can enter this form with one client selected or with a number of clients selected. When the administrator enters the form with one client selected then all controls are available for use and any changes made only affect the single client selected. When the administrator enters the form with more than one client selected then the RPL client Name Edit Box control is grayed as it is not meaningful to make changes in this control across client. All other controls are available for use but any that have conflicting details across clients (e.g. different Software Profiles) are shown as empty. These values remain unchanged for each client unless the administrator makes an entry into one of these controls. If the administrator makes any entries into a control, the value of that control is set for all the selected clients. The exit button is selected as the default action.

### Detailed Description of Form Contents

### Normal Profile Name Combo Box

This contains a read only list of all the normal profiles supported by the system. The FIRST entry in the list is taken to be the default. The accelerator for this control is **P**.

### Exit Conditions

Any modifications made by the administrator is saved to the local database upon exit from this form. The administrator is prompted for confirmation of this.

### EDIT PROFILE FORM - Details Notebook

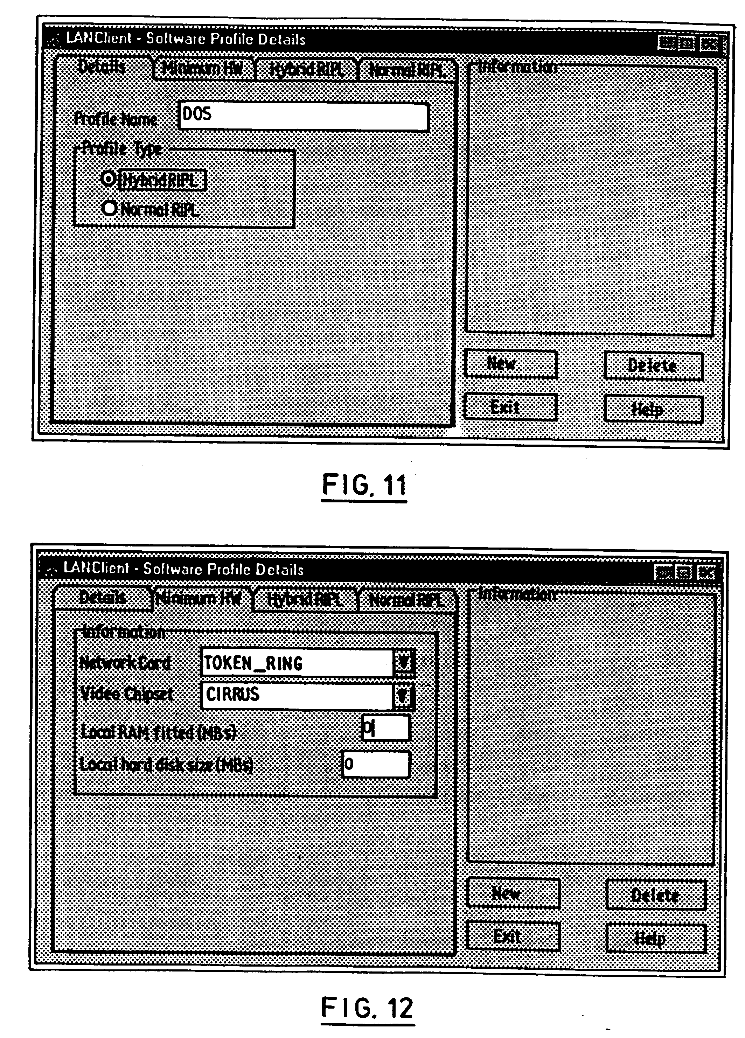

Referring now to Figure 11, this form allows the administrator to perform a number of actions on a single Software Profile. These include Create a new Profile, Edit and existing Profile, Change the name of a Profile, and Delete an existing Profile. If the administrator makes any changes to any of the details in any of the notebooks in this form for a profile then he or she is prompted to discard or save these changes to the working copy of the local database before he or she can proceed with a new, delete or exit operation. Data validation for mismatched clients only takes place at this point.

### Entry Conditions

All previous settings made by the administrator are restored upon entry. The administrator can only enter this form with one Profile selected. The exit button is selected as the default action.

### Detailed Description of Form Contents

### Profile Name Edit Box

This contains the Name of the Software Profile. Typing into this box is taken as a rename action on the current Profile and all other details are left unchanged and the old Profile name is replaced with the new on leaving this form. Note that profile names must be unique for either Hybrid or Normal RPL. The accelerator for this control is **P**.

### Profile Type Radio Buttons

This shows the current RPL type of the Profile. The default for this control is Hybrid RPL (e.g. the top radio button is set). The accelerator for these controls are **Y** and **L.**

### New Profile Button

The action of this control is common across all tabbed notebook sections in this form. This causes all controls to be either cleared, in the case of controls that do not have default values, or set to their defaults. The Details Notebook section are selected and placed in Profile Name edit box.

If the administrator has previously made any changes to the Profile selected when he or she entered this form then confirmation is required. The administrator is prompted with simple dialogue box with four buttons: Commit changes (this commits the changes made and starts the new operation), Discard changes (this cancels all the changes made and starts the new operation), Cancel new (this allows the administrator to go back to before he or she pressed the New Button), Help (this provides context sensitive help). Accelerators for these buttons are **C**, **D, A** and **H**. The accelerator for the New client Button is **N**.

### Delete Profile Button

The action of this control is common across all tabbed notebook sections in this form. This causes the selected Profile to be deleted from the local database and returns the administrator to the Edit Site Form. Confirmation is required. The administrator is prompted with simple dialogue box with three buttons: Commit Delete (this commits the deletion and returns to the Edit Site Form); Cancel Delete (this cancels the delete and returns to the Edit Profile Form); and Help (this provides context sensitive help). Accelerators for these buttons are **C, A** and **H**. The accelerator for the Delete client Button is **P**.

### Exit Conditions

Any modifications made by the administrator is saved to the local database upon exit from this form. The administrator is prompted for confirmation of this.

### EDIT PROFILE FORM - Minimum Hardware Notebook

Referring now to Figure 12, this form allows the administrator to specify the minimum hardware requirements that this Profile needs to run on a client. These are then used to check for valid clients when the administrator applies clients to Software Profiles, changes a client definition, or edits the minimum requirements for a Profile. The administrator can set the values to don't care if required. If any changes are made to this form then all the associated clients must be checked to make sure that they conform to the minimum standards laid down. If they don't then any problems are raised using the client Profile Mismatch form.

### Entry Conditions

All previous settings made by the administrator are restored upon entry. The administrator can only enter this form with one Profile selected. The exit button is selected as the default action.

### Detailed Description of Form Contents

### Network Card Combo Box

This contains a read only list of all the card types supported by the system. In addition to this list the entry "Don't care" is shown as the first entry. The don't care option is taken to be the default. The accelerator for this control is **T**.

### Video Chipset Combo Box

This contains a read only list of all the video chipsets supported by the system. In addition to this list the entry "Don't care" is shown as the first entry. The don't care option is taken to be the default. The accelerator for this control is **V**.

### Local RAM Edit Box

This contains the amount of RAM required by the Profile. Zero is taken to mean don't care. The don't care option is taken to be the default. The accelerator for this control is **R.**

### Local Hard Disk Edit Box

This contains the amount of Hard Disk required by the Profile. Zero is taken to mean don't care. The don't care option is taken to be the default. The accelerator for this control is **A**.

### Exit Conditions

Any modification made by the administrator is saved to the local database upon exit from this form. The administrator is prompted for confirmation of this.

### EDIT PROFILE FORM - Hybrid RPL Notebook

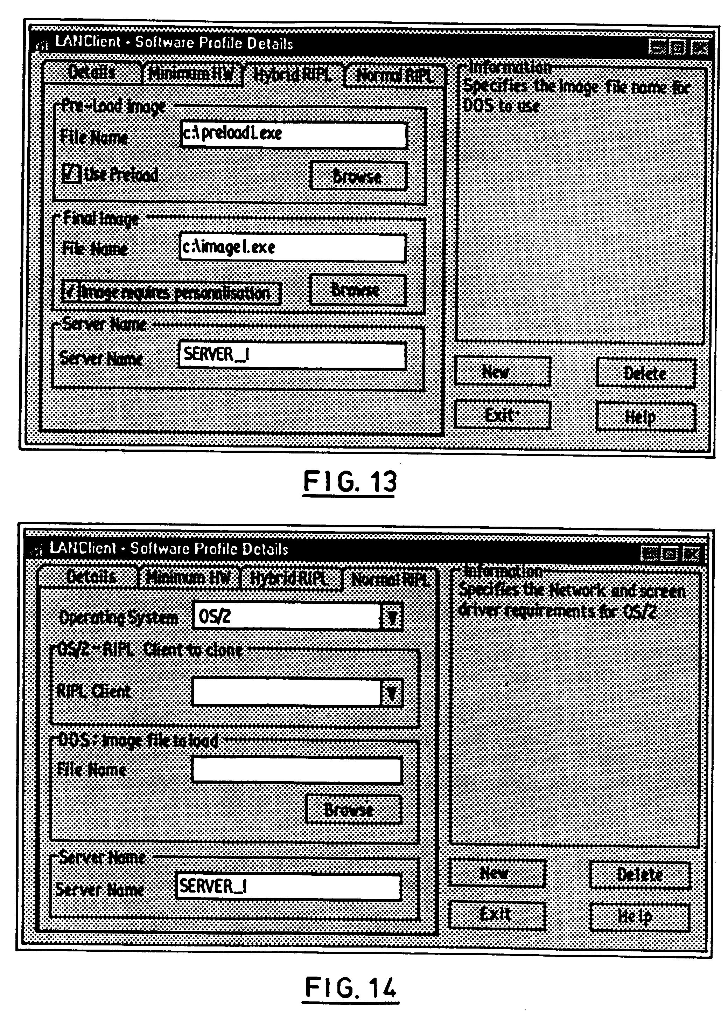

Referring now to Figure 13, this form allows the more advanced administrator to set up the details for a Hybrid RPL profile. This includes the images that are to be loaded and whether the Final Image needs personalisation or not. The aim of the Hybrid RPL process is to fully install as wide a range of software as possible onto the hard disks of a large number of clients. There are three main steps in doing this:
a. Prepare the clients for the final image. Some software (e.g. Windows 95) will not work on standard FAT partitions. The administrator must have some way of coping with this as all network clients are only shipped with standard FAT partitions. The Pre-Load Image allows for this by specifying an initial set of software to be run before the final image is loaded.
b. The final Image can then be copied down to the clients hard disk. The Image file here is a self-extracting .EXE file that contains ALL the files required by the client. This is copied down to each client and then expanded onto the local hard disk of each client. At this point in the process there is a range of clients that all have an IDENTICAL software image on their hard disks. Unfortunately, this is not enough to allow all types of software to run properly. Most networking systems require a unique TAG for each client on the network. For example, TCP/IP addresses may need to be set to allow a protocol stack to work, Terminal Emulation programs may require different id's for each client, etc. The list of all possible conditions is virtually limitless. As a result there has to be some flexible way of configuring or adding personality to each client. This is done via personality files associated with each client. These are run as the last step in the Hybrid RPL process.
c. If a hybrid RPL Profile requires that each client is configured separately then the client Personality files are downloaded and run on each client. These are simple batch files that allow .INI, text, and registration database files to be edited for each client. These are specified on a client by client basis in the Edit Client Form.
All of these are covered by controls in this form.

### Entry Conditions

All previous settings made by the administrator are restored upon entry. The administrator can only enter this form with one Profile selected. The exit button is selected as the default action.

### Detailed Description of Form Contents

### Preload Image File Name Edit Box

This contains the directory path and name of the Preload Image. This image is downloaded and run before the Final Image is loaded. The Preload Image is a transient set of programs that are run on the client to prepare the client for the Final Image. This Edit box is grayed if the associated check box is not set. The accelerator for this control is **P**.

### Preload Image File Name Browse Button

This brings up the common file find dialogue to allow the administrator to select an image file. This button is gray if the associated check box is not set. The accelerator for this control is **R**.

### Preload Image Check Box

This shows if the Preload Image is to be used or not. If checked then the Preload Image file name must be set before saving this profiles details I.E. a blank entry is NOT allowed. When this box is toggled the Preload Image Edit Box and Browse Button will be grayed and ungrayed. The accelerator for this control is **U**.

### Final Image File Name Edit Box

This contains the directory path and name of the Final Image. This image is downloaded and copied to the hard disk of all clients that use this profile. The Final Image is a persistent set of programs that are downloaded to a clients hard disk and stay there until the administrator specifies that they should be changed. Unlike Normal RPL the administrator can create an image they want to download and the hybrid RPL process downloads and copies that image onto the client's hard file. It is up to the administrator to ensure that the image can run properly on the network hardware. Sample hybrid RPL files are provided to cover a range of options and to show the administrator how this process works. The accelerator for this control is **F**.

### Final Image File Name Browse Button

This brings up the common file find dialogue to allow the administrator to select an image file. The accelerator for this control is **B**.

### Personalisation Check Box

This shows if the Final Image requires configuration for each client. If this check box is set then ALL clients associated with this profile must have a personality file set in their Edit client forms. If this is not the case then the image will fail to run properly on these clients. As a result all clients must be checked at this point and any problems raised using the client Profile Mismatch form. The accelerator for this control is **E**.

### Server Name Edit Box

This contains the name of the server used for the Hybrid RPL process. This is set to the value given in the Defaults Edit Form unless the administrator modifies it explicitly for a profile. The accelerator for this control is **S**.

### Exit Conditions

Any modification made by the administrator is saved to the local database upon exit from this form. The administrator is prompted for confirmation of this.

### EDIT PROFILE FORM - Normal RPL Notebook

Referring now to Figure 14, this form allows the administrator to specify the normal RPL options for a profile. These cover the RPLing of OS/2, DOS and DOS/Windows, etc. These are handled in the normal way by the NOS at the server. The administrator selects the operating system to RPL from a fixed range of options provided. Under OS/2 the RPL process for OS/2 clients and DOS clients is completely different.

### Entry Conditions

All previous settings made by the administrator are restored upon entry. The administrator can only enter this form with one Profile selected. The exit button is selected as the default action.

### Detailed Description of Form Contents

### Operating System Combo Box

This contains a read only list of all the operating systems supported by the software. The accelerator for this control is **O**.

### RPL Clone Combo Box

This contains a read only list of all the known RPL clients on the sever (e.g. those in the RPL.MAP file for OS/2). The administrator can select an entry from this list and all clients associated with this profile will be cloned from that entry. The first entry is taken to be the default. The accelerator for this control is **C.**

### DOS Image File Edit Box

This contains the full path and file name of a valid DOS RPL image. These must be created using the NOS tools provided by the server. The accelerator for this control is **S**.

### DOS Image File Browse Button

This brings up the common file dialogue box to allow the administrator to select an image file for DOS. The accelerator for this control is **B.**

### Server Name Edit Box

This contains the name of the server used for the Normal RPL process. This is set to the value given in the Defaults Edit Form unless the administrator modifies it explicitly for a profile. The accelerator for this control is **S**.

### Exit Conditions

Any modification made by the administrator is saved to the local database upon exit from this form. The administrator is prompted for confirmation of this.

### CLIENT SERVER MISMATCH FORM

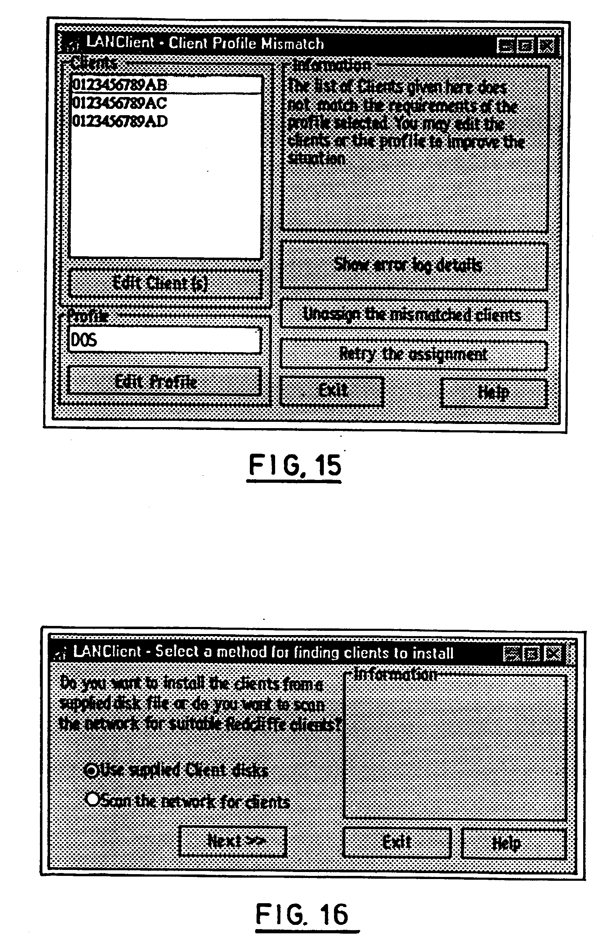

Referring now to Figure 15, this form allows the administrator to cope with errors when assigning clients to profiles or when editing clients and profiles. The form shows the administrator the clients and profile that do not match and allows them to take corrective action on either the clients or the profile. This mismatch can occur for one of the following two reasons.
a. The client hardware does not match the minimum hardware requirements for the profile. In this case the administrator can either lower the requirements for the profile or not assign these clients. It is assumed that the hardware details for the clients is correct. If that is not the case the administrator can upgrade the details for each client to reflect their new hardware settings.
b. The software profile requires that the client has a personalisation file and this has not been specified for these clients. In this case the administrator must assign personality files to each client or deassign the clients from this profile.

### Entry Conditions

All previous settings made by the administrator are ignored. The administrator is presented with all the clients that the local database working copy update was attempted on. All clients that failed are selected and failed clients are shown in red. All clients that match the profile are shown in black. The exit button is selected as the default action. Exit in this case defaults to be the same as cancel the assignment for these clients.

### Detailed Description of Form Contents

### Mismatched clients List Box

This contains a single level list of all the clients with the mismatched clients shown in red. These can be shown either as a list of Network addresses, or as a list of administrator defined client Names. In both cases the names and numbers used are unique on this server. The display type used is that set in the Edit Site Form. Each entry in the list has a small icon next to it. This is a pictorial representation of a client computer. The administrator can multi-select client items in this control.

All items in this control are arranged in alphabetical order. The following actions apply to the client items in this control, and all others have no effect.

| | |
|---|---|
| **Left Single Click on new item** | - Selects a single item, deselects any existing. |
| **Left Double Click on new item** | - Brings up the Edit client Form for that client. |
| **Left Double Click on selected item** | - Brings up the Edit client Form for the client(s). |
| **Keyboard** | - Normal outline key actions are supported. |

The accelerator for this control is **C**.

### Edit clients Button

This brings up the Edit client Form for the selected client(s). This is the normal course of action to correct any mismatch. The accelerator for this control is **E**.

### Mismatched Profile Edit Box

This is a read only edit box showing the Profile in question. The accelerator for this control is **M**.

### Edit Profile Button

This will bring up the Edit Profile Form for the Profile in question. Note that if the administrator edits the profile then the system must recheck all clients being assigned, not just those that mismatched in some way. As a result a new list of clients may now mismatch and this dialogue box may appear again. The accelerator for this control is **O**.

### Unassign Mismatched Clients Button

This carries on with the administrator selected operation processing all valid clients. The mismatched clients are transferred to the Unassigned group. Confirmation is required for this operation. The accelerator for this control is **U**.

### Show Log Button

This brings up a pop-up scrolling list box with details of all the mismatches that occurred. Each error line must include the client network address and some indication of the error that the administrator can understand. The accelerator for this control is **L**.

### Retry Button

This retries the operation that caused the mismatch form to appear. This option is only enabled if the administrator has edited either the clients or the profile in some way. It is gray at all other times. If the retry is successful then the operation that caused the mismatch completes as normal. If the retry fails then the administrator returns to this form. No confirmation is required for this operation. The accelerator for this control is **R**.

### Exit Conditions

Any modifications made by the administrator is passed back to the operation that caused this error. The whole transaction is then repeated by that process.

### QUICK FORM 1

Referring now to Figure 16, this form allows the administrator to start a quick installation process. This is used to install a new issue of networks with a previously set-up software profile.

### Entry Conditions

All previous settings made by the administrator are restored. This applies across all quick forms and includes the administrator using the Previous and Next keys across a number of forms. The next button is selected as the default action.

### Detailed Description of Form Contents

### Use Disk Radio Button

The administrator selects this option if he or she has a disk (or file) that contains a full description of the networks he or she is installing. The accelerator for this control is **D**.

### Scan The Network Radio Button

The administrator selects this option if he or she scans the network for any new networks. This is the default action. The accelerator for this control is **S**.

### Exit Conditions

Any modifications made by the administrator are passed on to the next form. If the administrator selects the previous option then all settings are remembered in case the administrator returns to this form later on.

### QUICK SCAN FORM 1

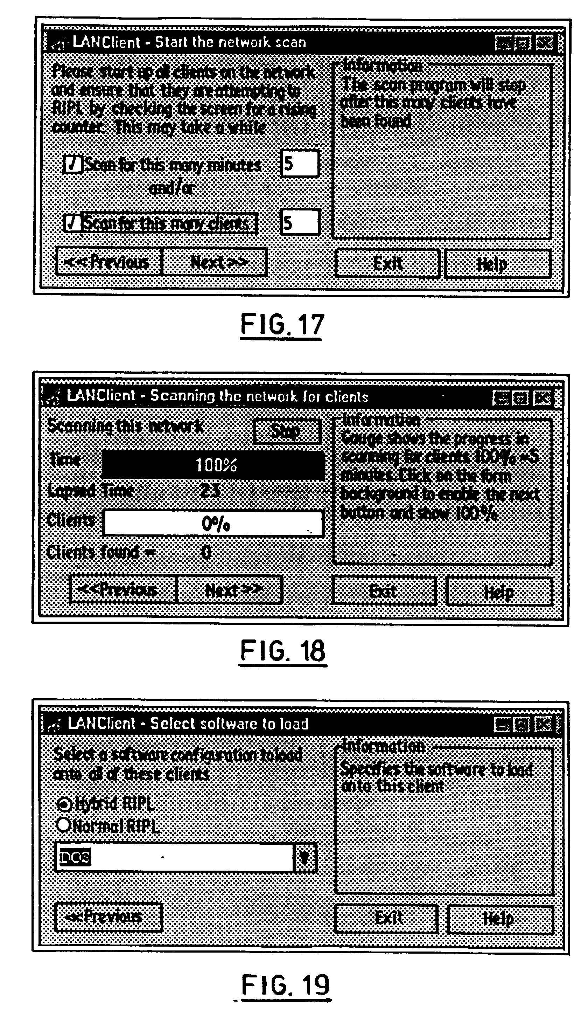

Referring now to Figure 17, this form allows the administrator to set up the options for a network scan for new networks.

### Entry Conditions

All previous settings made by the administrator are restored. This applies across all quick forms and includes the administrator using the Previous and Next keys across a number of forms. The next button is selected as the default action.

### Detailed Description of Form Contents

### Scan For Minutes Button

The administrator selects this option if he or she wants to scan the network for a number of minutes. If this is selected then the clients Edit Box is grayed. This is the default for this form. The accelerator for this control is **M**.

### Scan For Minutes Edit Box

The administrator can use this to set the number of minutes that the scan should operate for. The default for this is 10 minutes. The accelerator for this control is **A**.

### Scan For Number Button

The administrator selects this option if he or she wants to scan the network for a number of clients. If this is selected then the Minutes Edit Box is grayed. Note that, in this case, the scan program may never complete and it would be wise to warn the administrator and to include a time-out (say 1 hour) after which the administrator will be prompted to see if they wish to continue scanning. If the administrator selects both a time and a number of clients then the scan stops when one of the two limits is reached. The accelerator for this control is **L**.

### Scan For Number Edit Box

The administrator can use this to set the number of clients that the scan should look for before stopping. The default for this is 20 clients. The accelerator for this control is **C**.

### Exit Conditions

Any modifications made by the administrator are passed on to the next form. If the administrator selects the previous option then all settings are remembered in case the administrator returns to this form later on

### QUICK SCAN FORM 2

Referring now to Figure 18, this form shows the administrator any progress being made in scanning the network. The scan stopS whenever any one of the two progress bars reaches 100%, or when the administrator presses the stop button.

### Entry Conditions

All previous settings made by the administrator are restored. This applies across all quick forms and includes the administrator using the Previous and Next keys across a number of forms. The next button is selected as the default action.

### Detailed Description of Form Contents

### Time Progress Bar

This shows the administrator the time progress being made in scanning. When the administrator has selected to scan for a number of minutes this shows the percentage of time for the scan process. The bar will be updated every 10 seconds.

### Minutes Passed Text

This shows the lapsed time. This is updated every 10 seconds to show the total lapsed time for the current scan process.

### Time Progress Bar

This shows the administrator the found clients progress being made in scanning. This shows the number of clients found as a percentage of the total to find. This is updated every time a new client is found.

### Clients Found Text

This shows the number of clients found in this scan. This is updated every time and client is found.

### Stop Button

The administrator can stop the scan process at any time by hitting this button. If the scan is not complete then the button text changes to start and the administrator can restart the scan from the point at which it stopped. If the scan completes at any time then this button is grayed. The accelerator for this control is **S**.

### Exit Conditions

Any modifications made by the administrator are passed on to the next form. If the administrator selects the previous option then all settings are remembered in case the administrator returns to this form later on

### QUICK FORM 2

Referring now to Figure 19, this form allows the administrator to select the software to be loaded onto the new networks.

### Entry Conditions

All previous settings made by the administrator are restored. This applies across all quick forms and includes the administrator using the Previous and Next keys across a number of forms. The exit button is selected as the default action.

### Detailed Description of Form Contents

### RPL Radio Buttons

These allow the administrator to switch between Hybrid and normal RPL profiles. The default is Hybrid. When the administrator toggles these buttons the Profile Combo Box is updated to show the list of relevant profiles. In the case where only one sort of profile exist then only one radio button is enabled and it will be set at all times. The accelerators for these controls are **Y** and **O**.

### Profiles Combo Box

This is a read only combo box that shows all either all of the Hybrid profiles or all of the Normal Profiles that are known to exist on this system. These lists are updated with any toggle of the radio buttons. The first entry in each list is taken to be the default but, if the administrator selects a profile, this is remembered and presented to the administrator when they toggle back. The accelerator for this control is **R**.

### Exit Conditions

Any modifications made by the administrator are passed on to the next form. If the administrator selects the previous option then all settings are remembered in case the administrator returns to this form later on

### EXIT UPDATE FORM

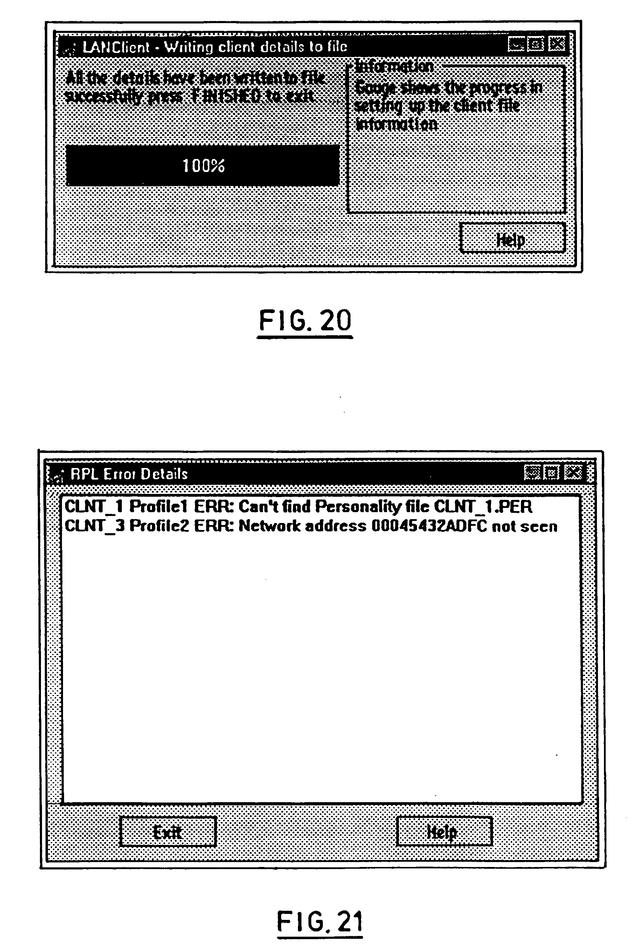

Referring now to Figure 20, this form shows the administrator progress being made in updating the system database with the new networks information.

### Entry Conditions

### None.

### Detailed Description of Form Contents

### Progress Bar

This show progress being made in updating the system RPL database file.

### Exit Conditions

The administrator cannot exit the server software until this program is complete. This dialogue box shuts down the process and closes itself when the update of the system database is finished.

### ERROR FORM

Referring now to Figure 21, this form shows the administrator any errors that occurred while trying to RPL the profiles defined by the administrator on to the selected clients. This is a non-modal dialogue box which the administrator can opt to leave on display while he or she attempts to fix the errors reported.

### Entry Conditions.

List box contains all the errors that occurred. No entries are selected.

### Detailed Description of Form Contents

### Error List Box

This is a single selection, non-editable, list box. This shows, for each error, the client name, the profile name and a short error message describing what went wrong.

### Help Button

This provides context sensitive help on this dialogue box. If the administrator has not selected an error entry in the list box then general help on the dialogue box is presented. If the administrator has selected an error entry then full help text on that particular error type, with hints on how to correct the error, is shown.

### Exit Button

Leaves the dialogue box.

### Exit Conditions

This dialogue box only provides the administrator with error information. Any clients which failed with an error are presented to the administrator in red in any future dialogue boxes. It is up to the administrator to act on the error messages here and then select an image reload in order to try to clear the error.

By way of summary, in the preferred embodiment of the present invention hereinbefore described, a computer network 10 comprises a server computer system 20 and a plurality of client computer systems 30 connected to the server computer system 20. The server computer system 20 comprises a graphic user interface (GUI). The GUI has means for displaying a plurality of client indicators, each signifying a different one of the client computer systems 30, and a plurality of profile indicators, each signifying a different function stored in the server computer system 20 and executable by one or more of the client computer systems 30. Means is provided for associating a selected profile indicator with a selected client indicator. Loading means loads, in response to the association, the function signified by the selected profile indicator from the server computer system 20 to the client computer system 30 signified by the selected client indicator.

## Claims

1. Graphic user interface apparatus for a server computer system which is connectable to a plurality of client computer systems in a computer network, the apparatus comprising: means for displaying a plurality of client indicators, each signifying a different one of the client computer systems, and a plurality of profile indicators, each signifying a different function stored in the server computer system and executable by one or more of the client computer systems; means for associating a selected profile indicator with a selected client indicator; and means for loading, in response to the association, the function signified by the selected profile indicator from the server computer system to the client computer system signified by the selected client indicator.

2. Apparatus as claimed in claim 1, wherein the association means comprises means for moving the selected profile indicator relative to the selected client indicator, the association being effected in response to the selected profile indicator and the selected client indicator falling within a predetermined range of each other.

3. A server computer system for connection to a plurality of client computer systems in a computer network, the server computer system comprising graphic user interface apparatus as claimed in claim 1 or claim 2.

4. A computer network comprising a plurality of client computer systems and a server computer system as claimed in claim 3 connected to the client computer systems.

5. A method of loading functions from a server computer system into a plurality of client computer systems connected to the server computer system in a computer network via a graphic user interface, the method comprising:
displaying a plurality of client indicators, each signifying a different one of the client computer systems;
displaying a plurality of profile indicators, each signifying a different function stored in the server computer system and executable by one or more of the client computer systems;
associating a selected profile indicator with a selected client indicator; and
loading, in response to the association, the function signified by the selected profile indicator from the server computer system to the client computer system signified by the selected client indicator.

6. A method as claimed in claim 5, wherein the associating step comprises moving the selected profile indicator relative to the selected client indicator, the association being effected in response to the selected profile indicator and the selected client indicator falling within a predetermined range of each other.

7. A computer program product for a server computer system which is connectable to a plurality of client computer systems in a computer network, the product comprising a graphic user interface having: means for displaying a plurality of client indicators, each signifying a different one of the client computer systems, and a plurality of profile indicators, each signifying a different function stored in the server computer system and executable by one or more of the client computer systems; means for associating a selected profile indicator with a selected client indicator; and means for loading, in response to the association, the function signified by the selected profile indicator from the server computer system to the client computer system signified by the selected client indicator.

8. A computer program product as claimed in claim 7, wherein the association means comprises means for moving the selected profile indicator relative to the selected client indicator, the association being effected in response to the selected profile indicator and the selected client indicator falling within a predetermined range of each other.
